# EUROPEAN PATENT SPECIFICATION

(11) **EP 3 026 813 B1**
(45) Date of publication and mention of the grant of the patent: **30.10.2019**
(21) Application number: 14194842.2
(22) Date of filing: 26.11.2014
(51) Int. Cl.: H02P 27/06

(54) **Frequency converter**
Frequenzumrichter
Convertisseur de fréquence

(43) Date of publication of application: 01.06.2016
(73) Proprietor: ABB Schweiz AG, 5400 Baden (CH)
(72) Inventor: Mustonen, Harri, 00380 Helsinki (FI); Tuomainen, Vesa, 00380 Helsinki (FI); Höysniemi, Tuomo, 00380 Helsinki (FI)
(74) Representative: Kolster Oy Ab

(56) References cited:
- CN-A- 103 795 324
- CN-U- 201 639 545
- CN-U- 202 305 662
- CN-U- 202 334 409
- CN-U- 203 734 508
- CN-Y- 201 153 243
- CN-Y- 201 374 160
- KR-A- 20100 118 793
- US-A- 5 410 326
- US-A1- 2005 012 396
- "Danfoss AG: Einfache Inbetriebnahme von Frequenzumrichtern", , 28 August 2011 (2011-08-28), Retrieved from the Internet: URL:https://www.maschinenmarkt.ch/danfoss- ag-einfache-inbetriebnahme-von-frequenzumr ichtern-a-326756/ [retrieved on 2011-08-28]
- "Rotary Frequency Converter Gallery Series RFC", , 31 December 2011 (2011-12-31), Retrieved from the Internet: URL:https://www.pscpower.com/rotary-freque ncy-converter-gallery/ [retrieved on 2011-01-01]
- "Kleine grafische Bedingeräte mit 4,5 Zoll Touchscreen Display", , 31 December 2007 (2007-12-31), Retrieved from the Internet: URL:https://www.maschinenmarkt.vogel.de/kl eine-grafische-bediengeraete-mit-45-zoll-t ouchscreen-display-a-98865/ [retrieved on 2007-01-01]
- Mitsubishi Electric Corporation: "Mitsubishi Graphic Operational Terminal GOT1000 Series", Mitsibishi, Japan , 30 September 2012 (2012-09-30), pages 1-92, Retrieved from the Internet: URL:http://dl.mitsubishielectric.com/dl/fa /document/catalog/got/l08054-gl/l08054i.pd f [retrieved on 2019-05-13]
- Mitsubishi Electric Factory Automation: "GT10 HMIs connected to Frequency Inverter S500, E700, D700, A700, F700", Mitsubishi, Japan , 31 December 2007 (2007-12-31), pages 1-20, Retrieved from the Internet: URL:http://dl.mitsubishielectric.com [retrieved on 2019-05-13]

## Description

### FIELD OF THE INVENTION

The present invention relates to frequency converters, and more particularly to frequency converters having a control panel.

### BACKGROUND OF THE INVENTION

Frequency converters are industrial devices which are used in different processes and automation systems for controlling the rotation of a motor. As a frequency converter may be used with different processes and for different purposes, the parameters of the frequency converter need to be set according to the specific use as the parameters configure the frequency converter in desired manner.

The parameters and selectable options relate, for example, to motor data from the motor plate of the controlled motor, such as nominal voltage and speed of the controlled motor. Further, the parameters can set the motor control principle, rotational speed limits, speed ramp times and switching frequency of the frequency converter, for example.

The parameters and information on the selected parameters together with operational data are shown and selected in the control panel of the frequency converter. The control panel includes buttons, touch screen or similar means for inputting commands from the user. Further, the control panel also includes a display device for presenting the selectable and selected parameters and data relating to the operation of the frequency converter. The operator of the frequency converter in the industrial process sets up the parameters of the frequency converter using the display device together with the inputting means.

The information displayed in the frequency converter while the frequency converter is in operation or is being set up is shown as text and electrical symbols together with numbers. As similar mass produced frequency converters are employed in wide variety of countries, different language versions are needed for different countries such that the operator of the device in the industrial environment is able to operate the device. The different language versions of the user interface software require translations and the constant updating as the user interface may be updated during the lifetime of the frequency converter. Further, as wide variety of different language versions of the software are required, the storage of the different versions is not feasible in the frequency converter itself due to large amount of memory capacity required for the different versions.

Similarly, when a frequency converter is provided from the factory or storage to a certain language area with a correct language version, the frequency converter may be exported to some other country from its original destination having different language requirements. The operators of the frequency converter are technically qualified industrial workers but are not necessarily used to work using a foreign language.

Further, when product is shipped across countries, the textual user interface of original country may cause permanent impression of lower quality in the receiving country. Icon based user interface help to keep the first product impression neutral or even resulting a higher perceived quality by the end user.

Document CN201374160Y discloses a converter with a LCD display and LED display.

The publication "Danfoss AG: Einfache Inbetriebnahme von Frequenzumrichtern" discloses a frequency converter with an interactive display panel.

### BRIEF DESCRIPTION OF THE INVENTION

An object of the present invention is to provide a frequency converter so as to solve the above problem. The object of the invention is achieved by a frequency converter which is characterized by what is stated in the independent claim. The preferred embodiments of the invention are disclosed in the dependent claims.

The invention is based on the idea of using graphical icons in the display of the user interface of the frequency converter. The graphical icons are such that technically qualified operators are able to understand the symbols in the icons. The icons represent symbolically the operational data and parameters of the frequency converter.

An advantage of the frequency converter of the invention is that the maintenance of the software of the user interface is simpler as only one version is updated. Further, the number of stored product variants is smaller, as the product can be supplied and understood anywhere with the symbolic icons. The frequency converter of the invention can also be exported from its first origin without the need of updating the software.

### BRIEF DESCRIPTION OF THE DRAWINGS

In the following the invention will be described in greater detail by means of preferred embodiments with reference to the attached drawings, in which

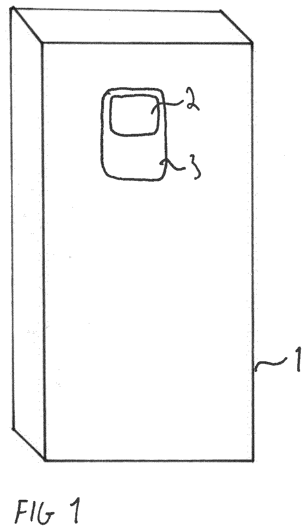

Figure 1 shows an example of the user interface of a frequency converter of the invention.

### DETAILED DESCRIPTION OF THE INVENTION

Figure 1 shows an example of a user interface of the frequency converter of the invention. In the display of the user interface, information is displayed as numbers and graphical icons. According to the invention, the frequency converter 1 comprises a display panel 2. The display panel 2 is adapted to display information relating to operation of the frequency converter as graphical icons.

The display panel is a part of the user interface 3 of a frequency converter. The user interface also comprises buttons or other input means such that appropriate settings can be entered to the frequency converter. Further, the input means can be used to select the displayed information during the use of the frequency converter.

The used graphical icons are stored in the memory of the frequency converter. The memory can be accessed by a processor or similar processing means such that the processing means reads the graphical icons from the memory and controls the display to show the icons in desired manner. The processor of the user interface executes commands inputted by the user and gathers displayed information relating to the use of the frequency converter from other parts of the frequency converter. Such gathered and displayed information is, for example, output frequency and switching frequency of the frequency converter. The user actions may change the displayed information. Therefore the processor of the user interface reads required graphical symbols from a memory and displays them according to given instructions. For example, the user may select to view output frequency of the frequency converter instead of displayed switching frequency. For this operation the user selects the information to be displayed using the user interface. The desired operation is commanded to the frequency converter using the user interface, and the processor of the user interface selects from the memory a graphical icon representing output frequency and reads the value of the output frequency from the frequency converter. After this information is read, the value and graphical symbol are shown in the display of the user interface.

The memory of the user interface includes the graphical icons or symbols indexed in such a way that the program of the processing means can read the correct graphical icon for displaying it on the display.

The displayed information may also contain text or abbreviations relating to values which are widely known for a technically qualified user. Such text may be, for example, "RPM", "Volts", "Hz", etc.

During the setting of the parameters the display of the frequency converter changes its displayed graphical icons or symbols depending on the stage of the operation. Some of the icons may also be stationary in the display. For example the icon which symbols main menu may be placed in such a manner that it can be accessed all the time during the parameter set up.

According to an embodiment of the invention, the user interface of the frequency converter is a touch screen. By implementing the display panel of the frequency converter as a touch screen, the graphical icons can be directly pressed or touched such that a desired action is obtained.

The display may also be partly implemented as touch screen. In that case the icons that are to be pressed are displayed on the touch screen while other information, such as information relating to operation is displayed in conventional screen.

According to another embodiment, the display is implemented as a LCD-display with colour. The colour used in the icons may also change according to the operation of the frequency converter. For example, when the frequency converter is not operating correctly, one or more of the symbols in the display may change their colour to red. Similarly, when parameters are fed to the frequency converter using the user interface, erroneous or otherwise faulty parameters may be highlighted using a colour which is not normally used in the user interface.

According to another embodiment, the display of the frequency converter is adapted to display information using animated or consecutively changing graphical icons. In this context animated or consecutively changing refers to two or more icons that are displayed at the same place one after the other. When icons are changed in certain order, the changed icons give an impression of an animated graphical icon. An example of such an animated graphical icon is an icon with horizontally moving three dots. Depending on the wanted effect, this could be implemented using two consecutively displayed icons in which the dots are placed in different positions. Three dots are typically associated with waiting or continuing.

When a touch screen is employed, a graphical icon may change its appearance once it is touched. The change appearance gives the user feedback that the icon in question was touched. The change may last until certain action is taken or for a certain time. The feedback may be implemented by using the processor of the user interface to read the two icon images from the memory and changing the icon after the icon is touched.

## Claims

1. A frequency converter (1) comprising a display panel (2), wherein
the display panel (2) is part of a user interface (3) of the frequency converter, the user interface being adapted for inputting user commands, **characterized in that** the display panel (2) is adapted to display information relating to operation or to set up of the frequency converter as graphical icons,
the frequency converter comprises further a processor or similar processing means in connection with the user interface (3) of the frequency converter and a memory readable by the processor or processing means,
the processor or processing means being
adapted to read user commands from the user interface,
adapted to read the graphical icons from the memory responsive of user commands,
adapted to read operational data from the frequency converter, and
adapted to display the operational data using the graphical icons.

2. A frequency converter according to claim 1, wherein the display panel (2) is implemented at least partly as a touch screen.

3. A frequency converter according to claim 1 or 2, wherein the display panel (2) is an LCD-panel.

4. A frequency converter according to any one of the previous claims 1 to 3, wherein the display is a colour panel providing coloured display.

5. A frequency converter according to any one of the previous claims 1 to 4, wherein one or more of the graphical icons are displayed as consecutive icons providing an animated graphical icon.

6. A frequency converter according to any one of the previous claims 1 to 5, wherein the graphical icons contain graphical symbols representing information on the parameters of the frequency converter or on the operation of the frequency converter.

## Patentansprüche

1. Frequenzwandler (1), der ein Anzeigepaneel (2) umfasst, wobei das Anzeigepaneel (2) Teil einer Benutzerschnittstelle (3) des Frequenzwandlers ist, wobei die Benutzerschnittstelle zum Eingeben von Benutzerbefehlen angepasst ist, **dadurch gekennzeichnet, dass** das Anzeigepaneel (2) angepasst ist, Informationen, die einen Betrieb oder eine Einrichtung des Frequenzwandlers betreffen, als grafische Icons anzuzeigen,
der Frequenzwandler umfasst ferner einen Prozessor oder ein ähnliches Verarbeitungsmittel in Verbindung mit der Benutzerschnittstelle (3) des Frequenzwandlers und einen Speicher, der vom Prozessor bzw. vom Verarbeitungsmittel lesbar ist,
wobei der Prozessor bzw. das Verarbeitungsmittel Folgendes ist
angepasst, Benutzerbefehle auf der Benutzerschnittstelle zu lesen,
angepasst, die grafischen Icons in Reaktion auf Benutzerbefehle aus dem Speicher zu lesen,
angepasst, Betriebsdaten aus dem Frequenzwandler zu lesen, und
angepasst, die Betriebsdaten unter Verwendung der grafischen Icons anzuzeigen.

2. Frequenzwandler nach Anspruch 1, wobei das Anzeigepaneel (2) mindestens teilweise als ein Touchscreen implementiert ist.

3. Frequenzwandler nach Anspruch 1 oder 2, wobei das Anzeigepaneel (2) ein LCD-Paneel ist.

4. Frequenzwandler nach einem der vorhergehenden Ansprüche 1 bis 3, wobei die Anzeige ein Farbpaneel ist, das eine farbige Anzeige bereitstellt.

5. Frequenzwandler nach einem der vorhergehenden Ansprüche 1 bis 4, wobei eines oder mehrere der grafischen Icons als aufeinanderfolgende Icons angezeigt werden, wodurch ein animiertes grafisches Icon bereitgestellt wird.

6. Frequenzwandler nach einem der vorhergehenden Ansprüche 1 bis 5, wobei die grafischen Icons grafische Symbole enthalten, die Informationen zu den Parametern des Frequenzwandlers oder zum Betrieb des Frequenzwandlers repräsentieren.

## Revendications

1. Convertisseur de fréquence (1) qui comprend un panneau d'affichage (2), dans lequel
le panneau d'affichage (2) fait partie d'une interface utilisateur (3) du convertisseur de fréquence, dans lequel l'interface utilisateur est conçue pour entrer des commandes d'utilisateur, **caractérisé en ce que** le panneau d'affichage (2) est conçu pour afficher des informations relatives au fonctionnement ou à la configuration du convertisseur de fréquence en tant qu'icônes graphiques,
le convertisseur de fréquence comprend en outre un processeur ou des moyens de traitement similaires en relation avec l'interface utilisateur (3) du convertisseur de fréquence et une mémoire qui peut être lue par le processeur ou les moyens de traitement,
dans lequel le processeur ou les moyens de traitement sont
conçus pour lire les commandes d'utilisateur provenant de l'interface utilisateur,
conçus pour lire les icônes graphiques dans la mémoire en réponse aux commandes d'utilisateur,
conçus pour lire les données de fonctionnement provenant du convertisseur de fréquence, et
conçus pour afficher les données de fonctionnement en utilisant les icônes graphiques.

2. Convertisseur de fréquence selon la revendication 1, dans lequel le panneau d'affichage (2) est mis en œuvre au moins partiellement en tant qu'écran tactile.

3. Convertisseur de fréquence selon la revendication 1 ou 2, dans lequel le panneau d'affichage (2) est un panneau LCD.

4. Convertisseur de fréquence selon l'une quelconque des revendications 1 à 3 précédentes, dans lequel l'afficheur est un panneau en couleur qui réalise un affichage coloré.

5. Convertisseur de fréquence selon l'une quelconque des revendications 1 à 4 précédentes, dans lequel une ou plusieurs des icônes graphiques sont affichées en tant qu'icônes consécutives qui réalisent une icône graphique animée.

6. Convertisseur de fréquence selon l'une quelconque des revendications 1 à 5 précédentes, dans lequel les icônes graphiques contiennent des symboles graphiques qui représentent des informations concernant les paramètres du convertisseur de fréquence ou concernant le fonctionnement du convertisseur de fréquence.
